# EUROPEAN PATENT SPECIFICATION

(11) **EP 4 669 619 B1**
(45) Date of publication and mention of the grant of the patent: **04.11.2026**
(21) Application number: 24714034.6
(22) Date of filing: 22.02.2024
(51) Int. Cl.: C01F 7/26

(54) **PROCESS FOR THE PRODUCTION OF HIGH-PURITY ALUMINA (HPA)**
VERFAHREN ZUR HERSTELLUNG VON HOCHREINEM ALUMINIUMOXID (HPA)
PROCÉDÉ DE PRODUCTION D'ALUMINE DE HAUTE PURETÉ (HPA)

(30) Priority: 24.02.2023 IT 202300003354
(43) Date of publication of application: 31.12.2025
(73) Proprietor: Ecotec Gestione Impianti S.r.l., 96100 Siracusa (IT)
(72) Inventor: IMERITO, Aldo, 96100 Siracusa (SR) (IT); AZARA, Pierandrea, 96100 Siracusa (SR) (IT); MALAFRONTE, Francesca, 96100 Siracusa (SR) (IT); RAGONA, Mario, 96100 Siracusa (SR) (IT); PISU, Massimo, 96100 Siracusa (SR) (IT)
(74) Representative: Santi, Filippo
(86) International application number: PCT/IT2024/050040
(87) International publication number: WO 2024/176275

(56) References cited:
- WO-A1-2021/097518
- US-A- 6 153 157

## Description

The present invention relates to a process for the production of high-purity alumina (HPA), from kaolin, through a process that is more economical and ecological compared to the currently used methods.

In the literature of this sector, high-purity aluminium oxide (Al₂O₃) is operatively indicated as high-purity alumina (HPA). It is a chemical substance sold in granular form, with a particle size determined on the basis of the industrial use, whose value is very high and increases with increases in the degree of purity. At the level of commercial classification, the following types of alumina are distinguished:
- Smelter grade alumina (SGA), Al₂O₃ purity 99.5%;
- HPA 3N, Al₂O₃ purity 99.9%;
- HPA 4N, Al₂O₃ purity 99.99%;
- HPA 5N, Al₂O₃ purity 99.999%;
- HPA 6N, Al₂O₃ purity 99.9999%.

Estimates on the development of the target market for the different types of HPA predict, in general, a strongly growing demand for these products, due mainly to the applications in the electronics industry. In particular, it is predicted that the strong demand for HPA will continue at least over the next decade, driven mainly by its fundamental use in the production of LEDs and lithium-ion battery separators; these two applications use HPA with a degree of purity of 4N (99.99% Al2O3). The current selling price of 4N HPA is over USD 20000/t.

The industrial processes currently used to produce HPA are very costly and have a strong impact from an environmental viewpoint. In fact, most of the HPA on the market is currently produced from high-purity aluminium. This entails, as a first step, the production of smelter grade alumina through the refinement of bauxite with the Bayer process. Subsequently, the smelter grade alumina is transformed into aluminium through a first electrolytic process (Hell-Herault process), followed by further refinement processes on specific lines, based on the degree of purity required for the metallic aluminium. Subsequently, this is again oxidated with dedicated processes in order to produce a high-purity alumina.

WO2021/097518 discloses a method for producing high purity alumina from kaolin.

The processes most used for this purpose, starting from high-purity metallic aluminium, belong to general category of "production of alumina by hydrolysis of alkoxides". In this type of process, high-purity aluminium alkoxide is synthesised through a reaction between metallic aluminium and an alcohol. Alumina hydrate is subsequently produced by hydrolysis of the aluminium alkoxide. Finally, HPA is obtained by calcination of the alumina hydrate.

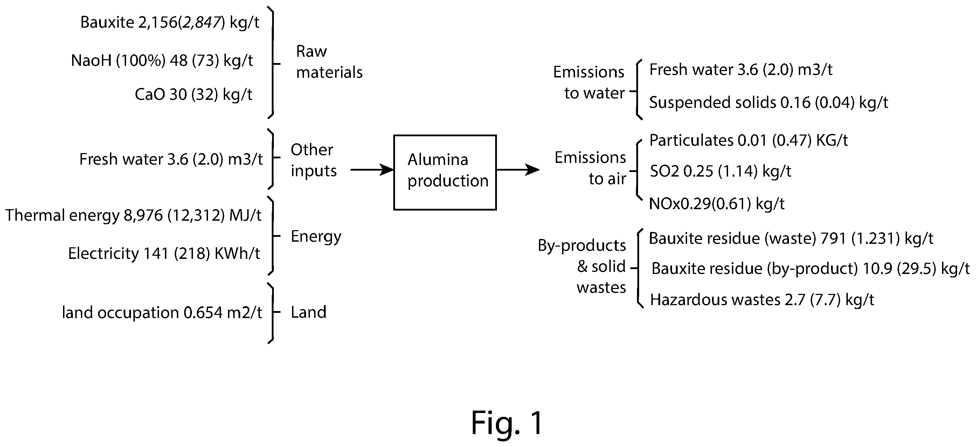

As is evident from what was described above, in the industrial practice most used to date, the procedures necessary to prepare high-purity alumina are very convoluted and complex, and entail high energy consumption, with a consequent impact due to CO₂ emissions. Moreover, if one assesses the entire process chain, starting from the refinement of bauxite, the environmental impacts due to the production of waste are also particularly severe. In the "European Commission - JRC Technical Report - Sustainability aspects of Bauxite and Aluminium. Climate change, Environmental, Socio-economic and Circular Economy considerations", Georgitzikis K., Mancini L., d'Elia E., Vidal-Legaz B. - July 2021, it is reported that the production of 1 tonne of alumina SGA involves the energy consumption, reactants, land occupation and emissions of contaminants (excluding CO₂) shown in Figure 1, drawn from the cited document.

To these data one must add the costs and emissions tied to the production of metallic aluminium of "base" purity, quantified, in the report mentioned above, as about 15 MWh/ton of metallic aluminium produced. To these one must then add the costs, consumption and impacts tied to the different of HPA production chains.

Because of the high production costs, the strong environmental impact, the introduction within the sector of increasingly restrictive regulations, specific for the production of HPA, there is a concrete risk that these factors will strongly limit the possibility of having, in the years to come, a production of HPA capable of meeting the fast-growing demand for that product. For this reason, at a global level, different companies have been investing in specific research & development in order to identify and develop new more cost-effective, low-impact HPA production methods capable of overcoming the technical limitations just described.

There are various known HPA production processes which are alternatives to the alkoxide process. Among them, one may mention thermal decomposition of ammonium alum, thermal decomposition of ammonium aluminium carbonate hydroxide (AACH), the so-called "underwater spark discharge process" with aluminium electrodes, the vapor-phase oxidation process, and similar processes.

One of the most promising processes, developed by Altech Chemicals Ltd, provides for, as the main line, leaching of kaolin and aluminous clays with hydrochloric acid. Aluminium is extracted in the form of aluminium chloride hexahydrate, from the purification and calcination of which alumina is obtained.

The patent granted to Altech Chemicals Ltd (Application No. AU 2020101329 A4) relates to the production of alumina from all types of aluminous clay, including kaolin, using hydrochloric acid and comprises the following steps:
- treating kaolin or an aluminous material to reduce the particle size and increase the alumina content;
- calcining the kaolin or aluminous material;
- leaching the aluminous material with hydrochloric acid;
- solid/liquid separation to produce a nearly saturated solution of aluminium chloride;
- crystallising aluminium chloride hexahydrate by adding hydrogen chloride gas to said nearly saturated solution of aluminium chloride;
- precipitating and separating the aluminium chloride hexahydrate;
- purification in several steps by dissolving the aluminium chloride hexahydrate in water and repeating the crystallisation process;
- roasting and calcining aluminium chloride hexahydrate to provide alumina.

This process overcomes some of the known problems in the production of HPA with the classic process; however, since it uses concentrated hydrochloric acid, also in a gaseous form, this application entails the use of special materials, costly equipment working under pressure and very high safety requirements. These are reflected once again in the HPA production costs.

There are also known processes providing for the use of sulphuric acid as a kaolin leaching agent, but they entail process steps to be carried out with pressurised reactors and using rather high extraction temperatures.

Thus, in the specific sector, there exists a need to produce HPA with a process that is more advantageous, both in economic and in ecological terms.

This need is satisfied by the process according to the present invention, which offers, moreover, further advantages that will become clear below.

In particular, the process according to the present invention enables the production of high-purity alumina (HPA), from kaolin, by providing a flexible process capable of differentiating the final product (HPA 3N, HPA 4N, HPA 5N) based on the demands of the target market. A portion of a high-purity intermediate, aluminium sulphate (AS), can be isolated and sold separately, based on the requirements of the specific target market.

In different steps of the process according to the invention, gas or liquid flows produced in a specific step are conditioned and reused in other steps of the process, with undoubted environmental and economic advantages.

Kaolin is a sedimentary rock, consisting mainly of kaolinite, a silicate mineral of the clay family. Kaolinite, which is the principal component of kaolin, has the chemical formula Al₂Si₂O₅(OH)₄. In kaolin there may also be oxides of iron or of other minority elements, which must be taken into account in order to be able to obtain high-purity alumina from this material.

The process according to the invention, described in general terms, comprises the following steps:
- (optional) thermal pre-treatment of the kaolin to convert it into metakaolin;
- conversion of the oxides in kaolin into water-soluble sulphates and subsequent selective extraction of the aluminium, through the combination of:
   - thermal treatment, under dry digestion or acid baking conditions, of a single-phase paste-like mixture obtained by mixing sulphuric acid with a concentration of between 6M and 18.5M together with kaolin or thermally pre-treated kaolin;
   - leaching, with water, of the product obtained from the thermal treatment of the single-phase mixture of sulphuric acid/kaolin, with highly selective solubilisation of the aluminium sulphate formed and separation of the solid matrix;
- selective recovery of the aluminium sulphate passed into the solution, through its transformation into insoluble solid aluminium ammonium sulphate (AAS);
- purification of the solid aluminium ammonium sulphate (AAS), through a series of successive purification steps (generally five) consisting of washing with hot water and filtration;
- calcination of the purified product, at a temperature in the range of 900-1200 °C, with decomposition of the AAS and formation of high-purity alumina (HPA).

The present invention will now be described, by way of non-limiting illustration, according to the preferred embodiments thereof, with particular reference to the figures of the appended drawings, wherein:
- figure 1 shows a diagram of the energy consumption, reactants, occupied land and emissions of contaminants (excluding CO₂), for the production of 1 tonne of alumina SGA, according to the prior art;
- figure 2 shows a block diagram of the process for the production of high-purity alumina (HPA) according to the present invention.

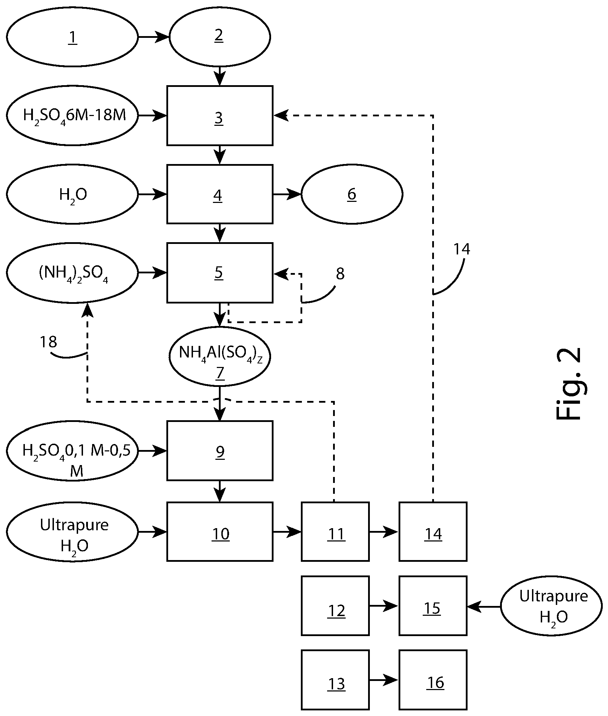

Making reference to figure 2, based on the quality and composition of the kaolin used, the process according to the invention can comprise an optional thermal pre-treatment 1 of the kaolin at a temperature of 300-1000 °C, with the aim of increasing the availability of the aluminium in the subsequent steps of the process. For the sake of simplicity of description, the process will be described below considering that one is operating on a thermally pre-treated kaolin. In fact, the thermal pre-treatment increases the initial extraction yield of aluminium from kaolin, since kaolinite, which is the main component of kaolin (chemical formula Al₂Si₂O₅(OH)₄) is transformed into metakaolinite (chemical formula Al₂Si₂O₇), thus originating metakaolin, the aluminium in metakaolinite being more easily transformable into a soluble form in the acid digestion step compared to that of kaolinite. However, it is known to the person skilled in the art that the subsequent steps and operating conditions would remain the same, with a lower aluminium extraction yield, even where the thermal pre-treatment was not carried out.

Therefore, according to a preferred embodiment of the process according to the invention, the kaolin is thermally pre-treated and, as a result, the kaolinite is transformed into metakaolinite, which has the chemical formula Al₂Si₂O₇. Any oxides of iron or of other minority elements, if they contain crystallisation water, will be transformed into the corresponding anhydrous oxides.

Following the thermal pre-treatment 1, the material thus produced 2 is subjected to a hot digestion step with sulphuric acid: this means that the material produced 2 is mixed with concentrated sulphuric acid and subjected to a thermal treatment 3 in a special reactor that works at atmospheric pressure. In a preferred embodiment of this step, the hot digestion with sulphuric acid takes place under dry digestion process conditions, subsequently defined simply as dry digestion 3. Alternatively, the hot digestion with sulphuric acid can take place under acid baking process conditions. The dry digestion process and the acid baking process are very similar acid digestion techniques which consist in mixing the solid matrix with a concentrated acid and, among other advantages, make it possible to avoid having, in the subsequent steps, the formation of colloidal silica. In the case of the present invention, with concentrated sulphuric acid and a thermal treatment, the compounds present are transformed into sulphates. The reactions are such as not to create the conditions for the formation of silica gel, which would make the subsequent operations of extracting the soluble sulphates very complex. Both the dry digestion and the acid baking take place at relatively low temperatures compared to other processes. In fact, dry digestion can take place at temperatures <160°C, or even <100°C ("Selective silica gel free scandium extraction from Iron-depleted red mud slags by dry digestion" - Godze Alkan et al.- Hydrometallurgy - Vol. 185, May 2019, pages 267-272). Acid baking, on the other hand, takes place at temperatures <300°C ("Recovery of scandium and neodymium from blast furnace slag using acid baking-water leaching" - Jihye Kim, Gisele Akimi. - RSC Advances - 2020 Aug 26; 10(53): 31936-31946).

Given the definitions of the dry digestion process and acid baking process set forth above, there is at least a partial overlap of the two processes, based on the conditions used; therefore, hereinafter the same values of the sulphuric acid concentration, reaction time and reaction temperature used in execution include the process according to the invention using both the dry digestion and the acid baking processes.

The concentration of sulphuric acid used for dry digestion is in the range of 6 M - 18.5 M; the reaction temperature is in the range of 50 °C - 250 °C; the reaction time is in the range of 30 minutes - 120 minutes (the same concentration interval also applies in the case of acid baking). In the process according to the invention, the amount of sulphuric acid added to the material to be subjected to dry digestion is calculated taking as reference the stoichiometric value of the oxides in the kaolin or in the thermally pre-treated kaolin, to be converted into sulphates: therefore, in the process according to the invention, the molar ratio is in the range of 0.5 - 2 times the stoichiometric value to be added for the conversion of the oxides in the kaolin or thermally pre-treated kaolin into sulphates.

The material formed by mixing the kaolin or thermally pre-treated kaolin with sulphuric acid at a concentration of between 6M and 18.5M is a single-phase mixture with the consistency of a wet paste, with characteristics differing from those of a solid/liquid suspension that would be obtained by means of a two-phase digestion or leaching process. This distinction is important, as it is decisive for bringing new effects differing from the ones of the known processes.

In the process according to the invention, at the end of the hot digestion step with sulphuric acid, under both dry digestion and acid baking conditions, one obtains a compact, dry solid material which contains silica, aluminium sulphate, and sulphates of other minority elements, such as, for example, iron, calcium, and potassium sulphate. This material is subjected to a leaching step 4, with the use of water. In the process according to the invention, the leaching of the dry digestion product with water can be carried out at a temperature in the range of 20 °C - 75 °C; the reaction time is in the range of 5 minutes - 30 minutes. The liquid-to-solid ratio L/S used in the leaching step is calculated taking as reference the initial mass of kaolin or thermally pre-treated kaolin that was used in the dry digestion step: in the process according to the invention, the liquid-to-solid ratio L/S thus defined is in the range of 5/1 - 20/1.

It is necessary to underscore that the steps of hot digestion with sulphuric acid (under both dry digestion and acid baking conditions) and leaching with water, carried out as described in the process according to the invention, have the advantages, compared to other processes for producing high-purity alumina that start off from kaolin or aluminous clays, of creating specific solubilisation conditions that are strongly selective for aluminium sulphate as opposed to the impurities or other sulphates present. This effect was sought and obtained following studies and laboratory tests and does not constitute an obvious consequence of reasoning arising from what was known in the prior art. As a demonstration of what has been affirmed, it should be borne in mind that some of the known processes comparable to the process according to the invention have a problem precisely with the management of impurities, such as, for example silica and potassium, brought into the solution together with aluminium, and this problem is solved in decidedly convoluted and complex ways. The different effect of the proposed process compared to the processes known in the prior art, as regards this step, is evident in the data presented in Table 1.

**Table 1**

| | | **A** | **B** | **C** |
|---|---|---|---|---|
| **Parameter** | ***u*.*m*.** | ***Dry digestion + water leaching process*** | ***Classic Leaching with H ₂ SO ₄ solutions*** | ***Classic Leaching with HCl solutions*** |
| ***Al*** | *mg*/*L* | 16.100 | 15.500 | 15.700 |
| ***Ag*** | *mg*/*L* | 0 | 0 | 0 |
| ***B*** | *mg*/*L* | 0 | 1,8 | 2,8 |
| ***Ba*** | *mg*/*L* | 0 | 0,9 | 20,3 |
| ***Ca*** | ***mg*/*L*** | **56,8** | **106,7** | **110,9** |
| ***Cr*** | *mg*/*L* | 1,8 | 1,5 | 1,8 |
| **Cu** | *mg*/*L* | 1 | 1,1 | 1,3 |
| ***Fe*** | *mg*/*L* | 255,5 | 256,5 | 310,6 |
| ***K*** | ***mg*/*L*** | **4,3** | **242,9** | **283,9** |
| ***Li*** | *mg*/*L* | 1,6 | 9,7 | 11,5 |
| **Mg** | *mg*/*L* | 37 | 44,6 | 51,2 |
| ***Na*** | ***mg*/*L*** | **2,1** | **16,7** | **19,3** |
| ***Pb*** | *mg*/*L* | 2,4 | 4,6 | 17,5 |
| ***Si*** | ***mg*/*L*** | **5,5** | **217** | **120** |
| ***Sn*** | *mg*/*L* | 0,3 | 1,2 | 1,3 |
| ***Sr*** | *mg*/*L* | 5,2 | 10,3 | 12,3 |
| **V** | *mg*/*L* | 3 | 3,4 | 4 |

Table 1 shows the data of three comparative tests, all conducted on aliquots of equal mass of a same sample of thermally pre-treated kaolin.

One aliquot was subjected to dry digestion and leaching with water, according to the methods of the process according to the invention; for the leaching, use was made of an L/S ratio of 10/1 relative to the thermally pre-treated kaolin used. The reaction temperature was 50 °C and the contact time 15 minutes.

Column A represents the composition of the leaching liquid thus obtained.

A second aliquot was subjected to leaching with a sulphuric acid 6 M solution, a temperature of 50 °C and a contact time of 60 minutes (procedure according to, for example, the process described in WO2021097518A1); for the leaching, use was made of an L/S ratio of 10/1 relative to the thermally pre-treated kaolin used.

Column B represents the composition of the leaching liquid thus obtained.

A third aliquot was subjected to leaching with a hydrochloric acid 6 M solution, a temperature of 70 °C and a contact time of 60 minutes (procedure according to the process of Altech Chemicals Ltd); for the leaching, use was made of an L/S ratio of 10/1 relative to the thermally pre-treated kaolin used.

Column C represents the composition of the leaching liquid thus obtained.

As can be noted from the data shown in Table 1 above, the aluminium brought into the solution in case A is slightly greater than that brought into the solution in cases B and C, even though the process according to the invention provided for a contact time of only 15 minutes. Moreover, thanks to the particular conditions created by the process according to the invention, the contaminants indicated in bold in Table 1 above were brought into the solution to a significantly smaller degree in case A as compared with cases B and C, with a considerable selectivity in the extraction of aluminium as opposed to the other elements in the kaolin matrix.

The results presented thus show that the combination of conditions created in the dry digestion step and subsequent leaching with water generates conditions of high selectivity in the solubilisation of aluminium, compared with the known techniques of the prior art.

To continue with the description of the process according to the invention, the leaching solution is separated from the solid residue 6 using known means and equipment such as, by way of non-limiting example, decantation, centrifugation, belt pressing, filter pressing, pressure filtration, and vacuum filtration. In a preferred embodiment of the process according to the invention, the solid residue 6 is separated from the leaching liquid by vacuum filtration.

After the separation of the solid residue 6, the leaching liquid is treated with the addition of ammonium sulphate (AS) to obtain the selective recovery 5 of aluminium sulphate. In this manner, in fact, the aluminium in the solution is precipitated in the form of insoluble aluminium ammonium sulphate (AAS) 7; in the process according to the invention, the amount of ammonium sulphate AS necessary is calculated taking as reference the stoichiometric value in moles of this compound relative to the aluminium in the solution. Therefore, in the process according to the invention, the ammonium sulphate (AS) is added in a molar ratio in the range of 1/1 - 1.5/1, relative to the stoichiometric amount of aluminium contained in the leaching solution. The reaction temperature, in the insoluble aluminium ammonium sulphate (AAS) formation step 7 is in the range of 20 °C - 75 °C. The reaction time in the insoluble aluminium ammonium sulphate (AAS) formation step is in the range of 5 minutes - 60 minutes.

In the process according to the invention, the precipitate of insoluble aluminium ammonium sulphate (AAS) 7 thus obtained is separated from the solution using known means and equipment such as, by way of non-limiting example, decantation, centrifugation, belt pressing, filter pressing, pressure filtration, and vacuum filtration. In a preferred embodiment of the process according to the invention, the precipitate of insoluble aluminium ammonium sulphate (AAS) is separated from the mother liquor by vacuum filtration.

In the process according to the invention, the mother liquor 8 separated from the solid is recirculated ahead of the step of adding ammonium sulphate, so as to maximise the recovery of the aluminium still remaining in the solution. The wet aluminium ammonium sulphate (AAS) produced is sent to the subsequent purification steps 9.

According to the new process proposed, in fact, the high-purity alumina is obtained by passing through a stage of production of high-purity aluminium ammonium sulphate (AAS). Therefore, a step of multi-stage purification 9-10 of the aluminium ammonium sulphate (AAS) produced is part of the process according to the invention.

More specifically, the solid aluminium ammonium sulphate (AAS) is subjected to a first wash 9 with diluted sulphuric acid, necessary to eliminate the absorbing mother liquor retained by the solid product. The concentration of the sulphuric acid used for the first wash 9 is in the range of 0.01 M - 0.5 M; the temperature of the diluted sulphuric acid solution used for the first wash is in the range of between 25 °C and 75 °C; the contact time of the first wash is in the range of 5 minutes - 30 minutes; the ratio between the washing liquid and the aluminium ammonium sulphate (AAS) produced is in the L/S range of 1/1 - 5/1. The solid washed in the first wash with diluted sulphuric acid is separated from the solution using known means and equipment such as, by way of non-limiting example, decantation, centrifugation, belt pressing, filter pressing, pressure filtration, and vacuum filtration. In a preferred embodiment of the process according to the invention, the washed precipitate of aluminium ammonium sulphate (AAS) is separated from the washing liquid by vacuum filtration.

The wet solid thus produced is sent to the second washing, which is carried out using ultrapure water.

In the process according to the invention, therefore, the wet solid aluminium ammonium sulphate (AAS) coming out of the first wash is subjected to the second washing 10, using ultrapure water as the washing liquid; the temperature of the ultrapure water used for the second washing is in the range of between 25 °C and 75 °C; the contact time of the first wash is in the range of 5 minutes - 30 minutes; the ratio between the washing liquid and the aluminium ammonium sulphate (AAS) produced is in the L/S range of 1/1 - 5/1. The solid washed with ultrapure water in the second washing 10 is separated from the solution using known means and equipment such as, by way of non-limiting example, decantation, centrifugation, belt pressing, filter pressing, pressure filtration, and vacuum filtration. In a preferred embodiment of the process according to the invention, the washed precipitate of aluminium ammonium sulphate (AAS) is separated from the washing liquid by vacuum filtration.

In the process according to the invention, the washing steps 10 after the second one are carried out in an identical manner to the second washing just described and are repeated until an aluminium ammonium sulphate of the desired degree of purity (3N, 4N, 5N) is obtained.

In the process according to the invention, there are at least three steps of washing 10 with water. No maximum number of steps of purification with water is defined, since the entrained impurities also depend on the quality of the kaolin used for the process.

In the process according to the invention, at the end of the last step of washing with water, the high-purity aluminium ammonium sulphate (AAS) produced is converted into the final products, likewise of high purity, by means of specific thermal treatments.

Therefore, in the process according to the invention, the high-purity aluminium ammonium sulphate (AAS) is transformed into aluminium sulphate (AS) 12 and high-purity alumina (HPA) 13, through a calcination step 11 carried out using known means and equipment such as, by way of non-limiting example, batch calcination reactors, continuous rotary kiln calcination reactors, and electric kilns.

The calcination step 11 for transforming the high-purity aluminium ammonium sulphate (AAS) is composed of two successive sub-steps. In particular, the aluminium ammonium sulphate (AAS) is transformed into the intermediate high-purity aluminium sulphate (AS) 12, in a first reaction sub-step carried out at atmospheric pressure and with a calcination temperature in the range of 250°C-600°C. In a preferred embodiment of the process according to the invention, the ammonia, sulphur oxides and water produced, in gaseous form, by the thermal decomposition of the aluminium ammonium sulphate, are collected and condensed in such a way as to form ammonium sulphate 18, which can be reused in the aluminium ammonium sulphate (AAS) production step, with an optimisation of the consumption of reagents and simultaneous reduction in environmental impacts.

In a secondary embodiment of the process according to the invention, a portion of the intermediate high-purity aluminium sulphate (AS) 12 can be destined for sale on the target market.

In the second sub-step of the calcination step 11 of the process according to the invention, the high-purity aluminium sulphate (AS) produced in the previous reaction step is further thermally treated to produce high-purity alumina (HPA) 13. The thermal process is carried out using known means and equipment, selected, by way of non-limiting example, from batch calcination reactors, continuous rotary kiln calcination reactors, and electric kilns. The aluminium sulphate AS produced in the first calcination sub-step 11 can be sent off for thermal transformation into high-purity alumina (HPA) 13 directly in line or via intermediate cooling, with the use of a single apparatus provided with zones at different temperatures or capable of creating temperature ramps, or in distinct apparatus. The second sub-step, in which the transformation of the high-purity aluminium sulphate (AS) into high-purity alumina (HPA) 13 takes place is carried out at atmospheric pressure and with a reaction temperature in the range of 900°C-1200°C. In a preferred embodiment of the process according to the invention, the sulphur oxides produced, in gaseous form, by the thermal decomposition of the aluminium sulphate (AS), are collected and conveyed into systems for the production of sulphuric acid in solution 14. This product can be reused in the step of dry digestion of the kaolin or thermally pre-treated kaolin, with an optimisation of the consumption of reagents and simultaneous reduction in environmental impacts.

Based on the desired degree of purity, the high-purity alumina (HPA) 13 produced after the calcination step 11 can be further subjected to washing with ultrapure water 15 to eliminate any further impurities rendered soluble after the thermal treatment. In a preferred embodiment of the process according to the invention, the further high-purity alumina (HPA) purification step 15 is carried out using ultrapure water as the washing liquid; the temperature of the ultrapure water used for each washing is between 25°C and 75°C; the contact time of the first wash is in the range of 5-120 minutes; the ratio of washing liquid to high-purity alumina (HPA) is in the L/S range of 5/1 - 10/1. At the end of each washing, the solid washed with ultrapure water is separated from the solution using known means and equipment such as, by way of non-limiting example, decantation, centrifugation, belt pressing, filter pressing, pressure filtration, and vacuum filtration. In a preferred embodiment of the process according to the invention, the washed high-purity alumina (HPA) is separated from the washing liquid by vacuum filtration. At the end of the washing cycles with ultrapure water, the wet high-purity alumina (HPA) is subjected to a further drying and calcination step 16. The temperature of the further drying and calcination step 16 is in the range of between 40 °C and 1200 °C, so as to produce ultra-pure alumina (HPA) of grades 17 3N, 4N, and 5N, intended for sale on the specific target market.

The invention will now be further described by way of non-limiting illustration, with an example embodiment of the process described.

### Example

The example illustrates a practical application of the process according to the invention.

Table 2 below shows the elementary breakdown of the untreated kaolin used in the present example for the production of high-purity alumina (HPA).

**Table 2**

| *Kaolin* | | |
|---|---|---|
| Ag | mg/kg | 4.9 |
| Al | mg/kg | 132188.0 |
| B | mg/kg | n.d. |
| Ba | mg/kg | 744.6 |
| Ca | mg/kg | 638.8 |
| Cd | mg/kg | 1.3 |
| Co | mg/kg | 8.2 |
| Cr | mg/kg | 50.0 |
| Cu | mg/kg | 8.7 |
| Fe | mg/kg | 1695.0 |
| K | mg/kg | 1797.0 |
| Mg | mg/kg | 186.3 |
| Mn | mg/kg | 39.7 |
| Mo | mg/kg | 3.9 |
| Na | mg/kg | 870.8 |
| Ni | mg/kg | 5.2 |
| Pb | mg/kg | 24.8 |
| Se | mg/kg | 14.3 |
| Si | mg/kg | 300749.0 |
| Ti | mg/kg | 1543.0 |
| V | mg/kg | 22.9 |
| Zn | mg/kg | 19.4 |

This kaolin was subjected to grinding (micronization) to obtain particles with a diameter <65 micron; in this manner, one obtains a considerable increase in the specific surface area of the material, an aspect that improves the performance of the material in the subsequent steps. Since it is known that kaolin, from a mineralogical viewpoint, can have distinct phases, grinding at a micrometric level produces an increase in the homogeneity of the overall elementary composition of the mass.

An aliquot of 150 g of kaolin thus obtained was subjected to a thermal treatment using an electric kiln at atmospheric pressure; the micronized kaolin was made to react at a temperature of 600 °C, for a reaction time of 2 hours, with the obtainment of metakaolin.

At the end of the thermal treatment, the load for the dry digestion step was prepared by adding 75mL of H₂SO₄ having a concentration of 18.5M to the metakaolin. This volume corresponds to the stoichiometric amount, increased by 25%, of sulphuric acid necessary to convert all the aluminium present into aluminium sulphate.

The material was thoroughly mixed and homogenised, using a porcelain capsule as the reactor. The 18.5 M metakaolin-sulphuric acid mixture was subjected to dry digestion, using an electric kiln at atmospheric pressure.

The 18.5 M metakaolin-sulphuric acid mixture was made to react at a temperature of 200 °C, for a reaction time of 2 hours, with the obtainment of a matrix mainly composed of a mixture of sulphates.

The solid obtained at the end of the dry digestion was subsequently subjected to the step of leaching with water. For this purpose, the material was transferred into a glass reactor, to which water was added as the leaching agent. Given that in the process according to the invention, the ratio between the solid to be treated and the leaching liquid is determined by taking as reference the initial mass of kaolin input to the process, the starting amount of material being 150 g, 1.5 L of water were added so as to obtain a liquid-to-solid ratio L/S of 10/1. Before being added into the reactor, the leaching water was pre-heated to a temperature of 50 C°; the reactor was shaken and thermostatically controlled so as to maintain the leaching reaction temperature constant at 50 °C. The reaction time was 15 minutes.

At the end of the leaching reaction, the extracting aqueous liquid was separated from the solid residue by vacuum filtration.

Table 3 below illustrates the composition of the aqueous leaching solution obtained, at the end of the leaching with water and after filtration, from the matrix produced after the dry digestion of the aforesaid metakaolin. In the case of elements whose concentration in the solution was below the detection limits of the instrument of analysis (ICP-OES spectrometry), the data is indicated in the table as < DL, which means a value below the detection limit.

**Table 3**

| ***Post-leaching solution*** | | |
|---|---|---|
| **Ag** | **mg/L** | < DL |
| **Al** | **mg/L** | 12600 |
| **B** | **mg/L** | < DL |
| **Ba** | **mg/L** | < DL |
| **Ca** | **mg/L** | 47.4 |
| **Cd** | **mg/L** | 0.02 |
| **Co** | **mg/L** | 0.33 |
| **Cr** | **mg/L** | 0.42 |
| **Cu** | **mg/L** | 0.23 |
| **Fe** | **mg/L** | 134 |
| **K** | **mg/L** | 7.4 |
| **Mg** | **mg/L** | 15 |
| **Mn** | **mg/L** | 2.4 |
| **Mo** | **mg/L** | 0.2 |
| **Na** | **mg/L** | 10 |
| **Ni** | **mg/L** | 0.2 |
| **Pb** | **mg/L** | < DL |
| **Se** | **mg/L** | < DL |
| **Si** | **mg/L** | 3 |
| **Ti** | **mg/L** | 68 |
| **V** | **mg/L** | 1.5 |
| **Zn** | **mg/L** | 3.3 |

By comparing the elementary composition of the initial kaolin, shown in Table 3, and determining the content of aluminium and other elements present in the post-leaching liquid, one can calculate the extraction yield of this step of the process.

In particular, if one considers the extraction yield obtained for aluminium, it proves to be above 95%. This value is obtained with the calculations illustrated below.

Based on the data shown in Table 3, the potentially extractible aluminium present in 150 g of untreated kaolin is given by: 132188.0 mg/kg of aluminium x 0.150 kg of sample = 19828.0 mg of aluminium.

The actually extracted aluminium present in the post-leaching liquid is given by: 12600.0 mg/L of aluminium x 1.5 L of post-leaching liquid = 18900.0 mg of aluminium.

The percentage of extracted aluminium relative to the extractible aluminium present in the initial kaolin is given by: (18900.0/19828.0) x 100 = 95.3%.

The composition of the leaching solution also reveals the high selectivity of the process in rendering the aluminium extractible, while leaving the other components of the matrix, such as, for example, silicon and potassium, insolubilised. Again, if one compares the concentration values of silicon and potassium in the initial kaolin, shown in Table 2, it is evident that the degree of solubilisation thereof is extremely low. With the same calculations as shown for determining the aluminium extraction percentage, in fact, one may deduce that the percentage amount of silicon brought into the solution is < 0.01%, whereas the solubilised potassium is equal to 4% of the element present in the kaolin.

The post-leaching solution thus obtained is sent to the step of selective separation of the aluminium, which takes place by precipitation of this element in the form of aluminium ammonium sulphate (AAS). The precipitation reaction, in a shaken reactor and at atmospheric pressure, is obtained by adding 225 g of ammonium sulphate to the leaching solution. The reaction temperature is 20 °C - 25 °C, and the reaction time is 30 minutes.

At the end of the selective precipitation reaction, the treated post-leaching solution, defined as the mother liquor, was separated from the solid precipitate of aluminium ammonium sulphate (AAS) by vacuum filtration.

The precipitation yield of the aluminium is evaluated by determining the residual concentration thereof in the filtered mother liquor. Table 4 below shows the composition of the mother liquor after precipitation of the aluminium ammonium sulphate (AAS).

**Table 4**

| ***Post-precipitation aluminium solution*** | | |
|---|---|---|
| **Ag** | **mg/L** | < DL |
| **Al** | **mg/L** | 1182.0 |
| **B** | **mg/L** | < DL |
| **Ba** | **mg/L** | 0.04 |
| **Ca** | **mg/L** | 49.6 |
| **Cd** | **mg/L** | 0.03 |
| **Co** | **mg/L** | 0.34 |
| **Cr** | **mg/L** | 0.43 |
| **Cu** | **mg/L** | 0.24 |
| **Fe** | **mg/L** | 132.0 |
| **K** | **mg/L** | 5.7 |
| **Mg** | **mg/L** | 14.4 |
| **Mn** | **mg/L** | 2.4 |
| **Mo** | **mg/L** | 0.07 |
| **Na** | **mg/L** | 7.0 |
| **Ni** | **mg/L** | 0.19 |
| **Pb** | **mg/L** | 0.17 |
| **Se** | **mg/L** | 0.05 |
| **Si** | **mg/L** | 2.7 |
| **Ti** | **mg/L** | 70.0 |
| **V** | **mg/L** | 1.5 |
| **Zn** | **mg/L** | 3.2 |

The precipitation yield of aluminium is about 90%. This value is obtained with the calculations illustrated below.

Based on the data shown in Table 4, one may deduce that the residual aluminium in the solution is given by: 1182.0 mg/L x 1.5 L = 1773.0 mg of aluminium.

Based on the data shown previously, the aluminium in the post-leaching solution was 18900.0 mg.

The precipitation yield of aluminium, relative to the aluminium present in the post-leaching liquid, is given by: 100-((1773.0/18900.0) x 100) = 90.6%.

The aluminium ammonium sulphate (AAS) separated after vacuum filtration, also contains some impurities due to a minimal precipitation of some minority elements and the residual presence, as the absorption liquid, of mother liquor with the impurities thereof.

Therefore, in accordance with the process according to the invention, the wet aluminium ammonium sulphate (AAS) was sent off for the purification steps. In the first washing step, the wet aluminium ammonium sulphate (AAS) was washed in a 1:1 mass ratio with H₂SO₄ 0.01 M, in a shaken reactor, at atmospheric pressure and a temperature of about 20 °C - 25 °C, with a contact time of 30 minutes. The solid was then separated from the washing solution by vacuum filtration.

After the first step of washing with diluted sulphuric acid solution, the aluminium ammonium sulphate (AAS) was subjected to a further 5 washing steps, all carried out with ultrapure water.

Each of these washing steps was performed with ultrapure water in a shaken reactor, at atmospheric pressure, with a washing temperature of 50 °C and contact time of 30 minutes. At the end of every washing step, the washing liquid was separated from the washed solid by vacuum filtration.

Table 5 below shows a breakdown of the impurities detected in the solid aluminium ammonium sulphate (AAS) before purification and at the end of the 6 washing steps.

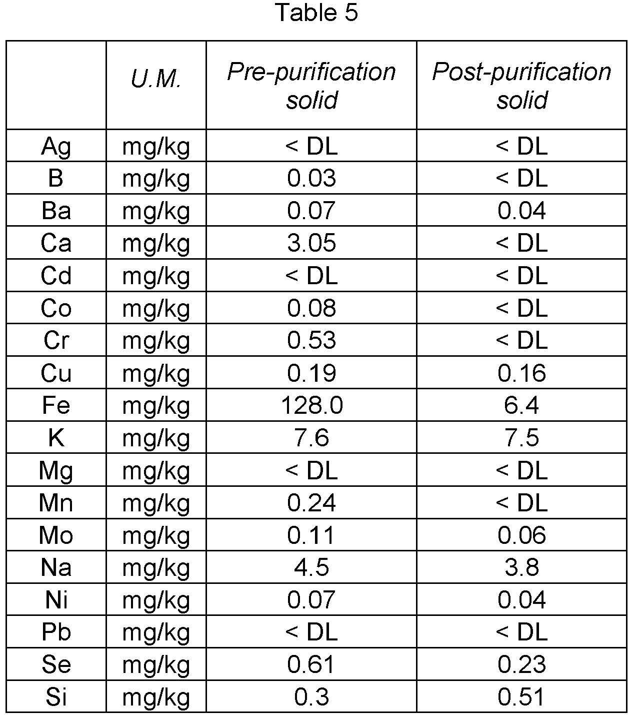

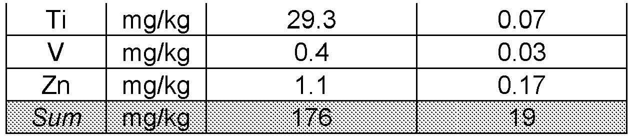

The purified aluminium ammonium sulphate (AAS) thus obtained was subsequently subjected to a thermal process at increasing temperatures, in an electric kiln, and underwent, in sequence, intermediate transformation into aluminium sulphate (AS) and, subsequently, into high-purity alumina (HPA). The initial temperature of the thermal treatment was 30 °C; the rate of increase of the temperature was 5 °C/minute. The final temperature used to complete the transformation of the aluminium sulphate into high-purity alumina was 1200 °C. The material was maintained at 1200 °C for 3 hours.

After the material was cooled, the high-purity alumina obtained was further subjected to washing with ultrapure water to eliminate any salts still present. This step provides for the use of a liquid-to-solid ratio L/S equal to 10/1. The washing water, before being added into the reactor, was pre-heated to a temperature of 35 C°; the reactor was shaken and thermostatically controlled so as to maintain the leaching reaction temperature constant at 35 °C. The reaction time was 60 minutes.

At the end of the separation of the solid from the washing water, the high-purity alumina was dried and calcined. In this material, the analysis of the product determined a degree of purity greater than 99.99%, i.e. high-purity alumina HPA 4N was produced.

The present invention was described by way of non-limiting illustration, according to preferred embodiments thereof, but it is to be understood that variations and/or modifications may be introduced by the person skilled in the art without going outside the scope of protection hereof, as defined by the appended claims.

## Claims

1. Process for the production of high-purity alumina (HPA), from kaolin, comprising the following steps:
- conversion of the oxides in the kaolin into water-soluble sulphates and subsequent selective extraction of the aluminium, through the combination of:
- thermal treatment, under dry digestion or acid baking conditions, of a single-phase paste-like mixture obtained by mixing sulphuric acid with a concentration of between 6M and 18.5M together with kaolin or thermally pre-treated kaolin;
- leaching, with water, of the product obtained from the thermal treatment of the single-phase mixture of sulphuric acid/kaolin, with highly selective solubilisation of the aluminium sulphate formed and separation of the solid matrix;
- selective recovery of the aluminium sulphate passed into the solution, through its transformation into solid aluminium ammonium sulphate (AAS);
- purification of the solid aluminium ammonium sulphate (AAS);
- calcination of the purified solid aluminium ammonium sulphate (AAS), with decomposition of the purified solid aluminium ammonium sulphate (AAS) and formation of high-purity alumina (HPA).

2. Process according to claim 1, **characterised by** further comprising the following preliminary step:
- thermal pre-treatment of the kaolin to convert it into metakaolin.

3. Process according to claim 2, **characterised in that** said step of thermal pre-treatment of the kaolin is carried out at a temperature in the range of 300-1000 °C.

4. Process according to any one of the preceding claims, **characterised in that** the amount of sulphuric acid used in said thermal treatment step is calculated in such a way that the molar ratio of sulphuric acid is in the range of 0.5 - 2 times the stoichiometric value to be added for the conversion of the oxides in the kaolin into sulphates; the reaction temperature is in the range of 50°C - 250°C; the reaction time is in the range of 30 - 120 minutes.

5. Process according to any one of the preceding claims, **characterised in that** said step of leaching, with water, the product obtained from the thermal treatment of the single-phase mixture of sulphuric acid/kaolin is carried out at a temperature in the range of 20°C - 75°C; with a reaction time in the range of 5 minutes - 30 minutes, and the liquid-to-solid ratio L/S between the water and the mass of kaolin is in the range of 5/1 - 20/1.

6. Process according to any one of the preceding claims, **characterised in that** said step of selective recovery of the aluminium sulphate is achieved by adding ammonium sulphate (AS) in a molar ratio in the range of 1/1 - 1.5/1, relative to the stoichiometric amount of aluminium contained in the leaching solution; at a temperature in the range of 20 °C - 75 °C and with a reaction time in the insoluble aluminium ammonium sulphate (AAS) formation step in the range of 5 minutes - 60 minutes.

7. Process according to any one of the preceding claims, **characterised in that** said solid aluminium ammonium sulphate (AAS) purification step comprises a plurality of successive purification steps consisting of a first wash with diluted sulphuric acid, and subsequent washing with hot water and filtration, said first wash with sulphuric acid requiring a concentration of sulphuric acid in the range of 0.01 M - 0.5 M; temperature of the sulphuric acid solution in the range of between 25 °C and 75 °C; contact time in the range of 5 minutes - 30 minutes; ratio of washing liquid to aluminium ammonium sulphate (AAS) in the L/S range of 1/1 - 5/1.

8. Process according to claim 7, **characterised in that** said washes with hot water require the use of ultrapure water; water temperature in the range of between 25 °C and 75 °C; contact time in the range of 5 minutes - 30 minutes; ratio of washing liquid to aluminium ammonium sulphate (AAS) in the L/S range of 1/1 - 5/1.

9. Process according to any one of the preceding claims, **characterised in that** said aluminium ammonium sulphate (AAS) calcination step comprises the following sub-steps:
- transformation of the aluminium ammonium sulphate (AAS) into high-purity aluminium sulphate (AS) 12, under conditions of atmospheric pressure and temperature in the range of 250 °C - 600 °C;
- transformation of the aluminium sulphate (AS) intermediate into high-purity alumina (HPA) 13, under conditions of atmospheric pressure and temperature in the range of 900 °C - 1200 °C.

10. Process according to any one of the preceding claims, **characterised in that** said high-purity alumina (HPA) obtained through said purified solid aluminium ammonium sulphate (AAS) calcination step is subjected to washing with ultrapure water, comprising a plurality of consecutive washing steps, alternating with steps to separate the solid from the washing water, each washing step having an ultrapure water temperature of between 25 °C and 75 °C; contact time in the range of 5 minutes - 120 minutes; ratio of washing liquid to high-purity alumina (HPA) in the L/S range of 5/1 - 10/1; and/or followed by drying and calcination of the high-purity alumina (HPA), at a temperature in the range of between 40 °C and 1200 °C.

## Patentansprüche

1. Verfahren zur Herstellung von hochreinem Aluminiumoxid (HPA) aus Kaolin, umfassend die folgenden Schritte:
- Umwandlung der Oxide im Kaolin in wasserlösliche Sulfate und anschließende selektive Extraktion des Aluminiums durch die Kombination von:
- thermischer Behandlung, unter Trockenaufschluss- oder Säureaufschlussbedingungen, eines einphasigen pastenartigen Gemisches, das durch Mischen von Schwefelsäure mit einer Konzentration zwischen 6M und 18,5M mit Kaolin oder thermisch vorbehandeltem Kaolin erhalten wird;
- Auslaugung des aus der thermischen Behandlung des einphasigen Gemisches aus Schwefelsäure/Kaolin erhaltenen Produkts mit Wasser, mit hochselektiver Solubilisierung des gebildeten Aluminiumsulfats und Abtrennung der Feststoffmatrix;
- selektiver Rückgewinnung des in die Lösung übergegangenen Aluminiumsulfats durch dessen Umwandlung in festes Aluminiumammoniumsulfat (AAS);
- Reinigung des festen Aluminiumammoniumsulfats (AAS);
- Kalzinierung des gereinigten festen Aluminiumammoniumsulfats (AAS), mit Zersetzung des gereinigten festen Aluminiumammoniumsulfats (AAS) und Bildung von hochreinem Aluminiumoxid (HPA).

2. Verfahren nach Anspruch 1, **dadurch gekennzeichnet, dass** es ferner den folgenden vorbereitenden Schritt umfasst:
- thermische Vorbehandlung des Kaolins, um diesen in Metakaolin umzuwandeln.

3. Verfahren nach Anspruch 2, **dadurch gekennzeichnet, dass** der Schritt der thermischen Vorbehandlung des Kaolins bei einer Temperatur im Bereich von 300-1000°C durchgeführt wird.

4. Verfahren nach einem der vorhergehenden Ansprüche, **dadurch gekennzeichnet, dass** die in dem Schritt der thermischen Behandlung verwendete Menge an Schwefelsäure derart berechnet wird, dass das Molverhältnis der Schwefelsäure im Bereich des 0,5 - 2-Fachen des stöchiometrischen Werts liegt, der zur Umwandlung der Oxide im Kaolin in Sulfate hinzuzufügen ist; die Reaktionstemperatur im Bereich von 50°C - 250°C liegt; die Reaktionszeit im Bereich von 30 - 120 Minuten liegt.

5. Verfahren nach einem der vorhergehenden Ansprüche, **dadurch gekennzeichnet, dass** der Schritt der Auslaugung des aus der thermischen Behandlung des einphasigen Gemisches aus Schwefelsäure/Kaolin erhaltenen Produkts mit Wasser bei einer Temperatur im Bereich von 20°C - 75°C durchgeführt wird; mit einer Reaktionszeit im Bereich von 5 Minuten - 30 Minuten, wobei das Flüssigkeit-Feststoff-Verhältnis L/S zwischen dem Wasser und der Kaolinmasse im Bereich von 5/1 - 20/1 liegt.

6. Verfahren nach einem der vorhergehenden Ansprüche, **dadurch gekennzeichnet, dass** der Schritt der selektiven Rückgewinnung des Aluminiumsulfats durch Zugabe von Ammoniumsulfat (AS) in einem Molverhältnis im Bereich von 1/1 - 1,5/1, bezogen auf die stöchiometrische Menge des in der Auslaugungslösung enthaltenen Aluminiums, bei einer Temperatur im Bereich von 20 °C - 75 °C und mit einer Reaktionszeit im Schritt der Bildung von unlöslichem Aluminiumammoniumsulfat (AAS) im Bereich von 5 Minuten - 60 Minuten durchgeführt wird.

7. Verfahren nach einem der vorhergehenden Ansprüche, **dadurch gekennzeichnet, dass** der Schritt der Reinigung des festen Aluminiumammoniumsulfats (AAS) mehrere aufeinanderfolgende Reinigungsschritte umfasst, die aus einer ersten Wäsche mit verdünnter Schwefelsäure und einer anschließenden Wäsche mit heißem Wasser und Filtration bestehen, wobei die erste Wäsche mit Schwefelsäure eine Schwefelsäurekonzentration im Bereich von 0,01 M - 0,5 M; eine Temperatur der Schwefelsäurelösung im Bereich zwischen 25 °C und 75 °C; eine Kontaktzeit im Bereich von 5 Minuten - 30 Minuten; ein Verhältnis von Waschflüssigkeit zu Aluminiumammoniumsulfat (AAS) im L/S-Bereich von 1/1 - 5/1 erfordert.

8. Verfahren nach Anspruch 7, **dadurch gekennzeichnet, dass** die Wäschen mit heißem Wasser die Verwendung von Reinstwasser; eine Wassertemperatur im Bereich zwischen 25 °C und 75 °C; eine Kontaktzeit im Bereich von 5 Minuten - 30 Minuten; ein Verhältnis von Waschflüssigkeit zu Aluminiumammoniumsulfat (AAS) im L/S-Bereich von 1/1 - 5/1 erfordern.

9. Verfahren nach einem der vorhergehenden Ansprüche, **dadurch gekennzeichnet, dass** der Schritt der Kalzinierung des Aluminiumammoniumsulfats (AAS) die folgenden Teilschritte umfasst:
- Umwandlung des Aluminiumammoniumsulfats (AAS) in hochreines Aluminiumsulfat (AS) 12 unter Bedingungen von Atmosphärendruck und einer Temperatur im Bereich von 250 °C - 600 °C;
- Umwandlung des Aluminiumsulfat-Zwischenprodukts (AS) in hochreines Aluminiumoxid (HPA) 13 unter Bedingungen von Atmosphärendruck und einer Temperatur im Bereich von 900 °C - 1200 °C.

10. Verfahren nach einem der vorhergehenden Ansprüche, **dadurch gekennzeichnet, dass** das durch den Schritt der Kalzinierung des gereinigten festen Aluminiumammoniumsulfats (AAS) erhaltene hochreine Aluminiumoxid (HPA) einer Wäsche mit Reinstwasser unterzogen wird, die mehrere aufeinanderfolgende Waschschritte umfasst, welche sich mit Schritten zur Abtrennung des Feststoffs vom Waschwasser abwechseln, wobei jeder Waschschritt eine Reinstwassertemperatur zwischen 25 °C und 75 °C; eine Kontaktzeit im Bereich von 5 Minuten - 120 Minuten; ein Verhältnis von Waschflüssigkeit zu hochreinem Aluminiumoxid (HPA) im L/S-Bereich von 5/1 - 10/1 aufweist; und/oder gefolgt von Trocknung und Kalzinierung des hochreinen Aluminiumoxids (HPA) bei einer Temperatur im Bereich zwischen 40 °C und 1200 °C.

## Revendications

1. Procédé de production d'alumine de haute pureté (HPA) à partir de kaolin, comprenant les étapes suivantes:
- conversion des oxydes présents dans le kaolin en sulfates solubles dans l'eau et extraction sélective subséquente de l'aluminium, par la combinaison de:
- traitement thermique, dans des conditions de digestion à sec ou de cuisson acide, d'un mélange pâteux monophasé obtenu par mélange d'acide sulfurique à une concentration comprise entre 6M et 18,5M avec du kaolin ou du kaolin prétraité thermiquement;
- lixiviation à l'eau du produit obtenu à partir du traitement thermique du mélange monophasé acide sulfurique/kaolin, avec solubilisation hautement sélective du sulfate d'aluminium formé et séparation de la matrice solide;
- récupération sélective du sulfate d'aluminium passé en solution, par sa transformation en sulfate d'ammonium et d'aluminium solide (AAS);
- purification du sulfate d'ammonium et d'aluminium solide (AAS);
- calcination du sulfate d'ammonium et d'aluminium solide (AAS) purifié, avec décomposition du sulfate d'ammonium et d'aluminium solide (AAS) purifié et formation d'alumine de haute pureté (HPA).

2. Procédé selon la revendication 1, **caractérisé en ce qu'**il comprend en outre l'étape préliminaire suivante: - prétraitement thermique du kaolin pour le convertir en métakaolin.

3. Procédé selon la revendication 2, **caractérisé en ce que** ladite étape de prétraitement thermique du kaolin est réalisée à une température comprise entre 300-1000°C.

4. Procédé selon l'une quelconque des revendications précédentes, **caractérisé en ce que** la quantité d'acide sulfurique utilisée lors de ladite étape de traitement thermique est calculée de telle sorte que le rapport molaire de l'acide sulfurique soit compris entre 0,5 - 2 fois la valeur stœchiométrique à ajouter pour convertir les oxydes présents dans le kaolin en sulfates; la température de réaction est comprise entre 50°C - 250°C; le temps de réaction est compris entre 30 - 120 minutes.

5. Procédé selon l'une quelconque des revendications précédentes, **caractérisé en ce que** ladite étape de lixiviation à l'eau du produit obtenu à partir du traitement thermique du mélange monophasé acide sulfurique/kaolin est réalisée à une température comprise entre 20°C - 75°C, avec un temps de réaction compris entre 5 minutes - 30 minutes, et le rapport liquide/solide L/S entre l'eau et la masse de kaolin est compris entre 5/1 - 20/1.

6. Procédé selon l'une quelconque des revendications précédentes, **caractérisé en ce que** ladite étape de récupération sélective du sulfate d'aluminium est réalisée par ajout de sulfate d'ammonium (AS) dans un rapport molaire compris entre 1/1 - 1,5/1 par rapport à la quantité stœchiométrique d'aluminium contenue dans la solution de lixiviation; à une température comprise entre 20 °C - 75 °C et avec un temps de réaction, lors de l'étape de formation du sulfate d'ammonium et d'aluminium insoluble (AAS), compris entre 5 minutes - 60 minutes.

7. Procédé selon l'une quelconque des revendications précédentes, **caractérisé en ce que** ladite étape de purification du sulfate d'ammonium et d'aluminium solide (AAS) comprend une pluralité d'étapes de purification successives consistant en un premier lavage à l'acide sulfurique dilué, suivi de lavages à l'eau chaude et d'une filtration, ledit premier lavage à l'acide sulfurique nécessitant une concentration d'acide sulfurique comprise entre 0,01 M - 0,5 M; une température de la solution d'acide sulfurique comprise entre 25 °C - 75 °C; un temps de contact compris entre 5 minutes - 30 minutes; un rapport liquide de lavage/sulfate d'ammonium et d'aluminium (AAS), exprimé par L/S, compris entre 1/1 - 5/1.

8. Procédé selon la revendication 7, **caractérisé en ce que** lesdits lavages à l'eau chaude nécessitent l'utilisation d'eau ultrapure; une température de l'eau comprise entre 25 °C - 75 °C; un temps de contact compris entre 5 minutes - 30 minutes; un rapport liquide de lavage/sulfate d'ammonium et d'aluminium (AAS), exprimé par L/S, compris entre 1/1 - 5/1.

9. Procédé selon l'une quelconque des revendications précédentes, **caractérisé en ce que** ladite étape de calcination du sulfate d'ammonium et d'aluminium (AAS) comprend les sous-étapes suivantes:
- transformation du sulfate d'ammonium et d'aluminium (AAS) en sulfate d'aluminium (AS) de haute pureté 12, dans des conditions de pression atmosphérique et à une température comprise entre 250 °C - 600 °C;
- transformation du sulfate d'aluminium (AS) intermédiaire en alumine de haute pureté (HPA) 13, dans des conditions de pression atmosphérique et à une température comprise entre 900 °C - 1200 °C.

10. Procédé selon l'une quelconque des revendications précédentes, **caractérisé en ce que** ladite alumine de haute pureté (HPA) obtenue par ladite étape de calcination du sulfate d'ammonium et d'aluminium solide (AAS) purifié est soumise à un lavage à l'eau ultrapure, comprenant une pluralité d'étapes de lavage consécutives, alternant avec des étapes de séparation du solide et de l'eau de lavage, chaque étape de lavage étant réalisée avec de l'eau ultrapure à une température comprise entre 25 °C et 75 °C; un temps de contact compris entre 5 minutes - 120 minutes; un rapport liquide de lavage/alumine de haute pureté (HPA), exprimé par L/S, compris entre 5/1 - 10/1; et/ou suivie d'un séchage et d'une calcination de ladite alumine de haute pureté (HPA), à une température comprise entre 40 °C et 1200 °C.
